# EUROPEAN PATENT APPLICATION

(11) **EP 4 773 034 A1**
(43) Date of publication of application: **08.07.2026**
(21) Application number: 25315002.3
(22) Date of filing: 02.01.2025
(51) Int. Cl.: G06F 30/17, G05B 19/4097, G06T 11/20, G06T 17/10, G06T 17/30, G06F 119/18

(54) **FORMING A GAP ON A SURFACE**

(71) Applicant: Dassault Systèmes, 78140 Vélizy-Villacoublay (FR)
(72) Inventor: Letzelter, Frédéric, 78140 Vélizy-Villacoublay (FR); Michardiere, Denis, 13092 Aix en Provence (FR)
(74) Representative: Bandpay & Greuter

(57) **Abstract**

The disclosure notably relates to a computer-implemented method for forming a gap on a surface. The surface represents a surface portion of a product to be manufactured. The method comprises providing specifications of the gap. The specifications comprise a radius of a connection between the surface and flanges of the gap. The specifications further comprise a profile of the gap. The specifications further comprise a shape defining the gap on the surface. The method further comprises sweeping the profile along the shape. The method further comprises connecting the result of the sweep to the surface by applying a fillet operation. The fillet operation has as radius the provided radius.

## Description

### TECHNICAL FIELD

The disclosure relates to the field of computer programs and systems, and more specifically to a method, system and program for forming a gap on a surface.

### BACKGROUND

A number of solutions, hardware and software, are offered on the market for the design, the engineering and the manufacturing of objects. CAD is an acronym for Computer-Aided Design, e.g. it relates to software solutions for designing an object. CAE is an acronym for Computer-Aided Engineering, e.g. it relates to software solutions for analyzing and simulating the physical behavior of a future product. CAM is an acronym for Computer-Aided Manufacturing, e.g. it relates to software solutions for defining product manufacturing processes and resources. In such computer-aided design solutions, the graphical user interface plays an important role as regards the efficiency of the technique. These techniques may be embedded within Product Lifecycle Management (PLM) solutions. PLM refers to an engineering strategy that helps companies to share product data, apply common processes, and leverage corporate knowledge for the development of products from conception to the end of their life, across the concept of extended enterprise. The PLM solutions provided by Dassault Systèmes (under the trademarks CATIA, SIMULIA, DELMIA and ENOVIA) provide an Engineering Hub, which organizes product engineering knowledge, a Manufacturing Hub, which manages manufacturing engineering knowledge, and an Enterprise Hub which enables enterprise integrations and connections into both the Engineering and Manufacturing Hubs. All together the solutions deliver common models linking products, processes, resources to enable dynamic, knowledge-based product creation and decision support that drives optimized product definition, manufacturing preparation, production and service.

While designing a product to be manufactured, there may be a need to add gaps in the design. In the manufactured parts, gaps may be necessary for different reasons. Gaps may come from a mechanical reality, to make two different parts fit together. For example, gaps are necessary to make parts slide. In some cases, gaps are part of the current shape and delimitate two parts of the same shape. In other cases, gaps delimit distinct pieces (e.g., pieces made of different materials) that must fit together. In other cases, gaps may be used to model joint planes of molded parts. FIG. 1 illustrates a schematic representation of a gap with the relative specifications. Gaps may also be necessary for buttons or other interactive elements or be included for design reasons. For example, FIG. 2A illustrates a schematic representation of a section of a button with the two gaps visible on both sides and FIG. 2B illustrates the same schematic representation of the section of the button with the relative specifications.

Therefore, in the design phase of a model, gaps need to be modeled while aiming at enforcing these use and/or manufacturing constraints. For example, in Concept Modeling, those gaps are modeled so that the shape of the designed product is as close as possible to the reality. This allows to take decision during the design review process.

One of the main ways to model a gap in a surface is using the shape fillet methodology. In this methodology, different intersecting shapes are merged together. Then, for each intersection, the user must execute a fillet operation to create the gaps. An example of this methodology is represented schematically in FIG.s 4-8. In FIG.s 4-8, two geometrical shapes are illustrated, and a Geometrical Set is updated accordingly. The Geometrical Set is the list of all the objects and operations applied on the objects, it may represent or correspond to, for example, the spec tree (i.e., specification tree) or feature tree of the model. In FIG. 4a two shapes, denoted Shape A and Shape B, are intersecting The Geometrical Set associated with the figure contains both shapes. FIG. 4b illustrates a side view of the two shapes, to simplify the illustration. FIG. 5 illustrates the first fillet operation between the two shapes. In FIG. 5 the bottom-left part of the quadrant is kept, the quadrant comprising Trimmed Shape A and Trimmed Shape B. The surfaces Shape A and Shape B are also trimmed simultaneously (topologically re-limited by the fillet to remove unnecessary material and result in a single topological object). The Geometrical Set is updated accordingly. FIG. 6 illustrates the operation corresponding to the one shown in FIG. 5, on the bottom-right part of the quadrant. The Geometrical Set is updated accordingly. FIG.s 7-8 illustrate the combination of the two fillet operations, illustrated in the previous figures. The combination of the two operations allows simulating this gap while preserving both topologies. FIG. 9 illustrates a surface with a gap corresponding to the result of the construction effectuated in FIG.s 4-8.

This method may be used to create a gap along the intersection of two surfaces, however several problems arise with this solution. First, for each fillet, the features are duplicated leading to exponential spec tree and/or feature tree size, as can be seen in FIG.s 4-8. For complex shapes, update cost, spec tree and/or feature tree size, and creation of features could lead to issues; this may imply issues with productivity and computer performance. Moreover, new geometries are created from these shape fillets. These geometries may lead to loss of materials in the production phase. Furthermore, in some cases these geometries may be inside the shape. Such geometries may lead to issues while processing the design, as, for example, while creating thickness. Such an example is shown in FIG. 10, which illustrates at 1001 an example of such a geometry. Moreover, the radius of the fillet, the thickness, the depth, and more generally the profile of the gap are difficult to set. In other words, the radius of the fillet, the thickness, the depth and/or the profile of the gap, which may be,directly constrained by the manufacturing machine that will manufacture the part (e.g., a stamping machine), may not be directly set as a constraint/input of the method so as to be enforced. Since the gap may not follow the Base-Mesh structure of the shape, subdivision operations (e.g., bevels) cannot be used to set these parameters. These parameters may be essential in the production phase, they may be imposed by the manufacturing steps and/or by the constraints that the product must satisfy. Therefore, this methodology has huge limitations.

The shape fillet methodology is one of the ways of creating gaps on surfaces. Other, less direct, methodologies exist.

Another known method is presented. This second method is much more flexible compared to the method described above, however it is extremely time consuming and requires many inputs by the user. The method is illustrated in FIG.s 11-15. FIG. 11 illustrates a surface 1101 that represents an object onto which one wants to introduce a gap and a guide curve 1102 that is used to induce the shape of the gap. A front view of FIG. 11 is represented in FIG. 12. By front view it is meant a 2D projection of the surface and curve that reduces the dimension of the objects. FIG. 13 shows the first two operations that must be executed by the user. By executed, it is meant that the user manually inputs the command to the program to execute said operations. The first operation O.1 is the projection of the curve 1102 onto the surface 1101. Said projection gives a curve 1301 lying on the surface. Then the user must execute the second operation O.2 that consists in creating two parallel curves 1302 and 1303 of 1102 at some distance (e.g., thickness of the gap) from 1102. Afterwards, the user must execute another two operations, FIG. 14. The third operation O.3 is the normal translation of the curve 1301 in the normal direction at some distance (e.g., depth of the gap). This operation allows to find a curve 1401. The fourth operation O.4 is a trim operation in between the two parallel curves 1302 and 1303. Afterwards, the user must execute another two operations, FIG. 15. The operations O.5 and O.6 are surface blend operations that join the curve 1302 with 1401 and the curve 1303 with 1401 to obtain two surfaces 1501 and 1502.

Therefore, in FIG.s 13-15, the user must explicitly request the six different operations (O.s 1-6). All these operations and the associated features are all independent, making it hard to optimize the process. With this methodology, each of the six operations leads to the creation of at least one new feature, leading to spec tree and/or feature tree size increase, memory consumption, high CPU computing time. Moreover, being an extremely manual process, the method requires a lot of time from the part of the user. The method may require hours, for example 4 to 6 hours of work, to create a single gap. Furthermore, all the operations must be repeated for each gap that the user wants to introduce in the surface.

Finally, in none of the possible methods to design gaps, the specifications of the gap are easy to change once imposed. The steps and operations executed by the user are not linked together and the user must adapt each of these operations for every change of the specifications. Therefore, the gaps must be necessarily introduced at the end of the design process and any modification requires great amounts of time from the user. Moreover, there is no way of automatically enforcing a gap parameter necessary with respect to manufacturing limitations (e.g., a fillet radius for connecting a flange of the gap to the surface, such radius being, possibly, directly dependent on the stamping machine) and/or optimized with respect to physical use and/or manufacturing of the produced object.

Within this context, there is still a need for an improved solution for forming a gap on a surface representing a surface portion of a product to be manufactured.

### SUMMARY

It is therefore provided a computer-implemented method for forming a gap on a surface. The surface represents a surface portion of a product to be manufactured. The method comprises providing specifications of the gap. The specifications comprise a radius of a connection between the surface and flanges of the gap. The specifications further comprise a profile of the gap. The specifications further comprise a shape defining the gap on the surface. The method further comprises sweeping the profile along the shape. The method further comprises connecting the result of the sweep to the surface by applying a fillet operation. The fillet operation has as radius the provided radius.

The method may comprise one or more of the following:
- the shape defining the gap comprises one or more curves, the curves lying on the surface;
- the shape comprises the projection to the surface of one or more curves, and the projection is with respect to sight direction during drawing, normal direction to the surface, or a user-defined direction;
- the shape comprises the intersection of the surface with one or more other surfaces;
- determining, for each given curve included in the shape, two additional curves that are both parallel to the given curve, and applying the fillet operation comprises trimming a portion of the surface in between the two additional parallel curves;
- for each curve included in the shape which has at least an extremal point lying in the interior of the surface, extending said curve to either a closed curve, or a curve having extremal points lying in the boundary of the surface;
- separating the result of the fillet operation into surfaces each comprising a respective flange of the gap, the separation consisting in removing a bottom portion of the gap;
- wherein the profile of the gap is a curve with two extremal points, the curve being without auto-intersections and lying in a plane, the extremal points being at the same height in the plane;
- the profile is defined by a thickness of the gap and a depth of the gap;
- the specifications of the gap include the thickness of the gap and the depth of the gap, and the method comprises automatically computing the profile based on the thickness of the gap and the depth of the gap;
- the shape of the gap, the profile of the gap and the radius of the connection respect manufacturing and/or use constraints; and/or
- the shape of the gap, the profile of the gap and the radius of the connection stem from a simulation of a performance of the product with respect to the manufacturing and/or use constraints.

It is further provided a computer-implemented data structure. The data structure comprises specifications of a gap. The specifications form semantic data associated to data defining a surface representation of a surface portion of a product to be manufactured. The specifications comprise a radius of a connection between the surface and flanges of the gap, a profile of the gap, and a shape defining the gap on the surface.

It is further provided a computer program comprising instructions for performing the method.

It is further provided a computer readable storage medium having recorded thereon the computer program and/or the data structure.

It is further provided a system comprising a processor coupled to a memory (and optionally to a graphical user interface), the memory having recorded thereon the computer program and/or the data structure.

It is further provided a device comprising a data storage medium having recorded thereon the computer program and/or the data structure.

The device may form or serve as a non-transitory computer-readable medium, for example on a SaaS (Software as a service) or other server, or a cloud based platform, or the like. The device may alternatively comprise a processor coupled to the data storage medium. The device may thus form a computer system in whole or in part (e.g. the device is a subsystem of the overall system). The system may further comprise a graphical user interface coupled to the processor.

### BRIEF DESCRIPTION OF THE DRAWINGS

Non-limiting examples will now be described in reference to the accompanying drawings, where:
- FIG.s 1 to 56 illustrate the method; and
- FIG. 57 shows an example of the system.

### DETAILED DESCRIPTION

It is proposed a computer-implemented method for forming a gap on a surface. The surface represents a surface portion of a product to be manufactured. The method comprises providing specifications of the gap. The specifications comprise a radius of a connection between the surface and flanges of the gap. The specifications further comprise a profile of the gap. The specifications further comprise a shape defining the gap on the surface. The shape may also be referred to as (and/or comprise) a guide defining the path and/or trajectory of the gap and may comprise guide curves or surfaces as further discussed herein after. The method further comprises sweeping the profile along the shape. The method further comprises connecting the result of the sweep to the surface by applying a fillet operation. The fillet operation has as radius the provided radius.

The method constitutes an improved solution for forming gaps on a surface representing a product to be manufactured.

Notably, the gap is formed using the provided specifications. Designing a gap with the method is thus an ergonomic and efficient process that may require the user only to give a radius, a profile, and a shape (e.g., a guide defining the trajectory of the gap), upon which the gap may be formed automatically. Notably, the user may directly provide specifications that meet manufacturing and/or physical use requirements of the product, as further detailed hereinafter. Also, providing the specifications of the gap may comprise the possibility to use one or more default specifications and execute iterations of the method in a trial and error and/or optimization process as further discussed hereinafter. For example, the user may just provide the shape of the gap and use the method to form a gap on the surface using a default radius and a default profile. The method may also include a list of default specifications and may include a method to infer the shape of the gap (e.g., a curve lying on the surface) from a shape drawn by the user. Therefore, designing a gap with the method may be done within a few seconds (e.g., just drawing the guide defining the shape of the gap and using default radius and profile) and with very few interactions (e.g., clicks with the mouse, input entered with a keyboard), contrary to the previously discussed prior art approaches. The method objectively reduces the number of user-machine interactions for designing the gap, which improves ergonomics.

The computations necessary in the method to compute and display the gap on the user interface are executed in real time, for example in the order of a few seconds, for example a second, for example a fraction of a second. The method is thus CPU efficient, contrary to the previously discussed prior art approaches.

The specifications of the gap may form a part of a data structure to be added to the computer-definition of the surface (e.g., in a modeled object defining the product and/or the surface). The data structure may further comprise the operations executed by the method, so that the execution of this data structure may lead to the formation of the gap on the surface. Such data structure may be referred to as a "modifier", which is a semantic supplementary data associated with a modeling object (like the surface) and may be formed by a stack operations and geometric types to be added to an untyped object. Therefore, the specifications of the gap in the method are easy to modify, and such modifications lead to forming a modified gap accordingly. Indeed, after modifying the specifications (e.g., in the data structure), the method may automatically (i.e., without the explicit intervention of the user) recompute the gap according to the new specifications. The specifications are modifiable, for example, through a user interface, as the one shown in FIG. 16. The specification may be stored in a configuration file, as known in the art, and be modifiable through the configuration file. The user may modify each specification independently from each other. After modifying the specifications, the method may include recomputing the gap and the computations required to recompute and show the gap according to the new specifications on the user interface are executed in real time. Moreover, during the designer phase, several operations may be required to create a model; therefore, the associated spec tree and/or feature tree may become complicated and difficult to navigate. Storing the information relative to the gap in a data structure (e.g., the modifier) associated with the surface, may reduce the size of the feature tree, making it easier to navigate, further increasing the ergonomic. Besides, the specification may form a modifier compatible with a weak-type definition of the surface, as discussed for example in European Patent Applications EP18306890.7 and EP18306891.5, which are incorporated herein by reference.

A further advantage lies in the fact that the provided specifications of the gap are not constrained to a topology of the surface, e.g., the gap is not necessarily linked to a mesh structure, or a subdivision of the mesh structure, defining the surface. The method is furthermore advantageous in that it may handle several inputs in a same input specification (e.g., in a same modifier).

Implementations of the method may always give a surface as an output, e.g., they may give as an output the base surface, whenever a non-valid input is introduced. The implementations may check the validity of the input after each modification of the specifications of the gap and/or of the surface. These implementations, however, may display messages in case of errors (non-possible user inputs). The messages may contain information to identify the non-valid input and may indicate the reason for the error. This greatly improves the ergonomics: these implementations may assist the user in the creation of the gap, by indicating errors and letting the user correct them, recomputing the gap in real time, all without interrupting the creation of the surface, and hence the product to be manufactured.

The method may be included in a manufacturing process and/or the output of the method may directly be usable for manufacturing the product. For example, the method may include, after forming a gap on a surface, storing the specifications of the surface with the gap in a file and, optionally, converting them into manufacturing instructions (for example with a known CAD to CAM conversion process) for manufacturing a product modeled by said surface with the gap. The method may also automatically send the manufacturing instructions and/or the stored file to a manufacturing machinery, so that the manufacturing machinery, following the instructions, produces the product represented by the surface with the gap formed. The method may comprise the physical manufacturing or simply storing manufacturing instructions obtained from the specifications and output of the method and/or sending these instructions to the manufacturing process).

The manufacturing process may be stamping a metal sheet. Specifically, the method may comprise storing stamping instructions in a file to be sent to a stamping machinery, such as a stamping press, to stamp a metal sheet and produce a product modeled by the surface with the formed gap. For example, the product to be manufactured may be a car part or car body part (e.g., a metal sheet part of a body in white, such as a door or a hood). Therefore, the method may give as output stamping instructions for the bodywork of a car including gaps, said gaps corresponding to, for example, doors, bonnet, trunk lid, and/or fuel doors.

The profile of the gap may depend (e.g., be determined by, or be dependent on or related to) a depth of the gap and a thickness of the gap. The specifications of the gap may be related to manufacturing instructions and/or use constraints. Specifically, the shape of the gap, the profile of the gap and the radius of the connection may respect manufacturing and/or use constraints. For example, the specifications may verify one or more of the following:
- the depth of the gap may correspond to the thickness of the product to be manufactured; that is, the surface portion may represent the outer part of the product to be manufactured and the depth of the gap may be used to define the flanges of the product; for example, if the manufacturing process consists in stamping of a sheet metal part (e.g., if the product is a car body part), the depth of the gap may correspond to the length of the flanges when they are in a folded state after stamping (as known per se from stamping); moreover, the depth may influence the weight, resistance and/or the aerodynamic properties of the product, hence said properties may be related to the depth of the gap;
- the radius of the connection may be imposed by the production machinery; for example, some manufacturing method cannot produce sharp edges (e.g., milling) and the radius of connection may depend on the physical constraints (e.g., the actual machine) of the production machinery; for example, the radius may depend on (e.g., directly correspond to) a radius of a stamping die used in a process of stamping for forming the flanges (by bending the sheet metal part that corresponds to the surface on a die portion having a rounded shape with this radius, thereby creating the flange);
- the radius of the connection may be limited by the bending tolerance of the material; that is, the production method may involve stamping a metal sheet and the radius may depend on the bending tolerance of the used metal sheet;
- the thickness of the gap may influence the aerodynamic performance and the extent to which water ingress occurs during exposure to rain; that is, the thickness, and more generally the profile, of the gap may influence the amount of air and/or water entering in the gap and/or exiting the gap;
- the thickness of the gap may be imposed by temperature considerations; that is, the product may be exposed to temperature variations and the parts used in the product may expand (e.g., whenever temperature increases); the gap may be designed to allow the expansion; furthermore, different materials expand differently whenever temperature increases, therefore the method may comprise finding an optimal profile of the gap depending on the different material used;
- the profile of the gap may have to respect the door opening angle; that is, the gap may delimit a door (e.g., a door of a car, a fuel door, a bonnet) and the profile of the gap (e.g., the depth and/or the thickness) may be imposed by the necessity of opening said door till a prescribed opening angle;
- the profile of the gap, may have an impact on how the various parts of the product to be manufactured are linked together and the overall stability of the product; that is, the product may be composed of different parts, said parts delimited by a gap, and the manufacturing process may comprise any method for joining the different parts together (e.g., welding); the method may, therefore, include adapting the profile of the gap based on the joining technique and/or material used; and/or
- the shape of the gap may correspond to the shape of the different parts of the product to be manufactured; that is, the gap may delimit a part of the product (e.g., a door, buttons) whose shape is the shape of the gap.

The above-described features may be comprised in a MODSIM method. A MODSIM method is a method of designing under constraints given by simulations (e.g., optimization of the KPIs). Therefore, in the method, the radius of connection, the thickness, the depth, and more generally all the variables comprised in the shape and/or profile of the gap may be used and/or modified by a simulation software (e.g., provided by Dassault Systèmes under the trademark SIMULIA^{®}). These values and/or variables may be therefore optimized with respect to several constraints, such as aerodynamic considerations, weight considerations, production cost considerations, or any of the above-described considerations. As explained above, the values and/or variables may also be constrained by manufacturing constraints which may depend on the physical machineries used during manufacturing (such as a press for stamping).

In other words, the method allows a user to directly input specifications that fulfill manufacturing and/or use requirements (such as one or more of the requirements listed above), and the method will then directly and automatically form a gap that respects those requirements. This implies that, contrary to the previously-discussed prior art methods, the method allows to directly input specifications that ensure manufacturability of the end product (i.e., the product with the gap formed as outputted by the method) and/or respect of physical use constraints, whereas prior art method did not provide such guarantee.

In examples, the user may not know in advance the best specifications of the gap for the given use of the product to be manufactured and/or given specific manufacturing requirements. For example, the user may not know in advance the best specifications with respect to any of the above discussed manufacturing and/or use constraints. The method may in these examples be used in conjunction with a simulation of performance to obtain said specifications. Specifically, the shape of the gap, the profile of the gap and the radius of the connection may stem from a simulation of a performance of the product with respect to the manufacturing and/or use constraints. Thus, the method may include, optionally, prior to providing specifications of the gap, performing a simulation of the product to be manufactured, the simulation giving as an output the specifications of a gap, and, optionally, using at least part of the output of the simulation as specifications of the gap. The simulation may be a manufacturing simulation (e.g., stamping) or a use simulation (e.g., aerodynamic performance, crashworthiness). The simulation may include simulation of respect of any of the above discussed manufacturing and/or use constraints and/or optimization of enforcement of these constraints. Thus, the method may take as an input, for example, a surface, a shape of a gap to be formed and instructions for a simulation and give as an output a surface with a gap formed according to the given shape, and a radius and a profile obtained in the simulation.

Alternatively, the user may choose as specifications for the gap the default specifications. The user may, for example, form several gaps by repeating the method with default specifications. Therefore, the method allows to have an entire design with all the gaps and, only at the end, to prescribe (i.e., modify the default specifications) the specifications of each gap. The method may include, after the formation of the gap(s) running a simulation of the surface with the formed gap(s). Again, the simulation may be a manufacturing simulation or a use/constraints simulation. The method may include, after the simulation, automatically changing the specifications of the gap(s) or letting the user change the specifications of the gap(s), according to the result of the simulation.

Alternatively, the design of the surface with the gap and some initial specifications may be given as an input to an optimization program. Such an optimization program may be programmed to automatically update the parameters of the surface and/or the specifications of the gap, so that the surface with the formed gap is optimized with respect to some constraints and/or objectives (for example the manufacturing and/or use constraints discussed above). Such optimization programs are well known in the art. Therefore, the method may include any of the known optimization methods to optimize the specifications of the gap in relation to the performance of the product with respect to the manufacturing and/or use constraints. The optimized specifications are then used as input, resulting in an optimized gap.

The method is for forming a gap on a surface. Specifically, the method takes as input the surface and specifications of the gap and forms, through the sweeping and connecting steps, the gap on the surface, and outputs the surface with the formed gap. Such output is also a surface and may, therefore, serve as input for another execution of the method: the method may be executed multiple times, each time taking as an input the output of the previous execution. The method may include displaying the output on a user interface (e.g., a display), storing the output in a file (e.g., a file containing manufacturing instructions and or convertible in such instructions), and/or sending the output to another system (e.g., a server, a manufacturing machinery).

A surface is a two-dimensional geometric object lying in a three-dimensional space and may represent the boundary of the product to be manufactured. The surface may be defined by equations, parameters and/or control points. Surfaces may be created using various modeling techniques and operations. A surface may, for example, be a part of a B-rep. For example, the surface may be a subdivision surface, as discussed in EP Patent Application Publication EP1750228A2, which is incorporated herein by reference.

The surface represents a surface portion of a product to be manufactured. This means that at some point after the method, that is downstream to the method, after forming the gap in the surface, a model of the product resulting from the design and comprising the gap defined by the method may be used for manufacturing the product in accordance with the design, as discussed above.

A gap in a surface is a discontinuity that divides the surface into multiple sub-surfaces (at least two). The gap may be a measurable void or space that divides portions of the surface. Importantly, the presence of the gap may not necessarily result in a complete disconnection of the surface. The gap includes flanges. Flanges are protruding surfaces at each side of the gap connected with the surface. Flanges may protrude inwardly with respect to a natural orientation of the product where the surface represents a delimitation between the inside (e.g., of a car) and the outside. The flanges may be perpendicular to the surface or be at any angle with respect to the surface. The flanges may be parallel to each other or be at an angle to each other. The flanges protruding at each side of the gap may be connected to each other by a bottom of the gap, a geometric structure that may be at a different level from the surface. FIG. 19 illustrates an example of a surface 1901 with a gap 1902. In FIG. 19, the gap 1902 creates a discontinuity between the left and right side of the surface, but the surface 1901 is connected. FIG. 19 also illustrates an example of a user menu 1903. The screenshots, FIG.s 39-56, provide many examples of gaps.

A gap may be defined through its specifications. The method comprises providing the specifications of the gap. The specifications comprise a radius, a profile and a shape. For example, the method may comprise obtaining some of the specifications of the gap directly by the user (e.g., using a user-interface), from a stored file (e.g., a configuration file) and/or from the output of another method (e.g., a simulation and/or optimization method as previously discussed).

FIG. 1 and FIG. 2B illustrate examples of specifications of gaps, consisting in a radius (fillet radius), depth of the gap and thickness of the gap. A gap may be defined as a pocket, which follows an intruding surface in the main surface, as depicted in FIG. 2 and FIG. 3. Such a gap may also be called a "Finger-Printed" gap; its specifications may further comprise an offset, that is a distance from the intruding surface.

The specifications of a gap comprise a shape defining the gap on the surface. The shape of a gap is a geometrical object that indicates the locations on the surface where the gap is to be formed. That is, where the discontinuities are to be created. The method may include obtaining the shape by a combination of different methods and, optionally, joining different bodies to form the shape. For example, the shape may comprise one or more curves. Each of these curves is called a shape-curve. The shape-curves may lie on the surface. Shape-curves allow the user to easily visualize where the gap is created. A shape-curve may be a curve projected to the surface. Therefore, the shape may contain the projection to the surface of one or more curves. Specifically, the projection may be with respect to sight direction during drawing, normal direction to the surface, or a user-defined direction. The projection may be any projection known in the art. Therefore, providing the specifications of the gap may also include providing a projection. The choice of the projection may also be part of the data-structure (e.g., the modifier) comprising the specifications, so that it may be changed at any time after the method.

FIG. 20 illustrates a surface 2001. In FIG. 21, three different curves determining the shape of the gap 2101 are shown; these are the curves that will be projected on the surface. The projected curves on the surface 2201 are illustrated in FIG. 22.

Projecting the curves to the surface has additional advantages. Indeed, it may be easier to design a curve in the 3D space and then project it to the surface, instead of being constrained by the surface. The curves to be projected may also come from other parts of the design, e.g., a different piece of the product to be manufactured.

Providing specifications of the gap may, therefore, include:
- obtaining curves drawn by a user, converting said curves into curves usable by the method; wherein converting may be done with any of the methods known in the arts, e.g., any of the method for converting curves drawn by a user to curves defined by equations, parameters and/or control points;
- obtaining equations, parameters and/or control points for curves by a user, by a simulation, or by an optimization process; and/or
- obtaining a choice of a projection; preferably, projecting the curves onto the surface.

For example, the curves above may be subdivision curves, as discussed in EP Patent Applications EP23306674.5 and EP23306680.2, which are incorporated herein by reference.

The shape may also comprise the intersection of the surface with one or more other surfaces. This intersection may consist of one or more curves. The one or more other surfaces may be part of the design, e.g., may be other parts of the product to be manufactured. They may also come from predicted interactions of the product to be manufactured with the real-world. Examples are given in FIG. 24. FIG. 23 illustrates a surface 2301 and FIG. 24 illustrates the same surface with three other surfaces 2401. The shape of the gap consists in the intersection of these other surfaces 2401 with the surface 2301.

Providing specifications of the gap may, therefore, also include obtaining equations, parameters, and/or control points for surfaces by a user, by a simulation, or by an optimization process; and taking the intersection of the obtained surfaces with the surface.

Another advantage of defining the shape as above, by the means of curves and/or surfaces, is that after modifying said curves and/or surfaces, the method may automatically recompute the gap according to the new specifications. For example, the curves and/or surfaces may be defined by parameters and/or control points and the method may include detecting, in real time, any change in said parameters and/or control points and updating the gap afterwards, that is, in real time. Moreover, the curves to be projected and/or the surfaces may also be modified with geometric operations, such as rotations, dilatations, or any geometric transformation of the space. Therefore, the method may also include updating the gap after such geometric operations.

The method may further comprise, after obtaining as input a main surface and a shape of the gap comprising curves to be projected and/or surfaces, detecting problematic inputs (e.g., inputs that cannot be processed by the method so as to form gaps), reporting errors regarding these inputs (e.g., displaying errors in a user interface containing details regarding the problematic inputs), and continuing the method after ignoring the problematic inputs. Examples of problematic inputs that the method may detect may be:
- a curve that does not project onto the main surface;
- a curve that projects onto a point at the main surface;
- a surface that intersects trivially with the main surface;
- a surface that intersects at a point with the main surface; and/or
- a surface that has a two-dimensional intersection with the main surface.

The method may further include inferring part of the input if the input does not satisfy some of the requirements.

A closed curve is a curve without extremal points, as for example a circle, an ellipse, an oval, or any other closed curve as known in the art. A curve lying on a surface that is either closed or has extremal points at the boundary of the surface is called separating. Separating curves divide the surface into two or more zones (i.e., surfaces) partially delimited by said curve. For example, separating curves may delimit the various parts of the product to be produced.

The method may detect as problematic inputs the shape-curves that are not separating. Alternatively, the method may further comprise extending each shape-curve to a separating curve. That is, the method may further comprise, for each curve (e.g., a curve lying on the surface) included in the shape which has at least an extremal point lying in the interior of the surface, extending said curve to either a closed curve, or a curve having extremal points lying in the boundary of the surface. Therefore, the method may include, prior to the forming of the gap, processing the shape so that each shape-curve separates the surface into two or more parts.

This extending step allows the user great flexibility. For example, if a shape-curve comes from a projection of a curve, the user does not have to precisely check that the end points of the projected curve correspond with the boundary of the surface. The method may automatically correct the curves by extending them to separating curves. In examples, the curves may be obtained through different methods and there may be rounding errors or approximation errors that affect the curves. Therefore, such curves may not have the extremal points exactly at the boundary of the surface and the extension method may allow the user to ignore such problems. Hence, the extending step may save time to the user, further increasing the ergonomics of the method.

The method may include any method to extend curves to closed curves known in the art. For example, the method may include adding at each extremal point in the interior of the surface of each shape-curve a portion of a geodesic starting from said extremal point. The geodesic may, for example, have the same tangent vector as the shape-curve at the extremal point.

The specifications further comprise a profile of the gap. The profile may be the transverse, two-dimensional, geometrical design of the gap. The profile may represent how the gap looks at each transversal plane perpendicular to the shape and may be the same at each transversal plane perpendicular to the shape. The profile comprises the flanges and may comprise a bottom of the gap.

The profile may be a one-dimensional geometric object in the two-dimensional transverse plane. The profile of the gap may be a curve with two extremal points. The curve may be without auto-intersections and lying in a plane. The extremal points may be at the same height in the plane. By "the same height in the plane" it is meant that the plane is given with cartesian coordinates, and the extremal points have the same value with respect to one of the coordinates, e.g., the vertical coordinate.

Designing a profile as a curve has considerable advantages. The method may include any of the known methods to design a curve to obtain a profile. The profile may be very easy to adapt to the concrete use of the object to be manufactured, that is, the use of the object after manufacturing. The curve may also be obtained as an output of a simulation and/or optimization method, as known in the art. The profile of the gap may, for example, have a U-shape or a V-shape. By U-shape, it is meant a profile consisting of two lines of equal length joined together by half a circle on the lower extremal points of the lines. By V-shape, it is meant a profile consisting of two lines of equal length joined together at a point at the middle distance between the two lines.

Examples of profiles of a gap are given in FIG. 25. A profile of a gap may be characterized and/or defined by a number of parameters. For example, the thickness of the gap may be defined to be the distance between the two extremal points of the profile. The depth of the gap may be the difference of height between the extremal points (that may be at the same height) and the lowest point in the profile. The depth of the gap may also be the length of the flanges.

The specifications of the gap may include the thickness of the gap and the depth of the gap, and the method may further comprise automatically computing the profile on the base of the thickness of the gap and the depth of the gap. That is, the method, after obtaining the thickness and depth of the gap, may perform a series of actions to determine the profile of the gap. An implementation of such actions is presented in FIG. 26 and is discussed in detail further below.

The method may further include default parameters for the thickness and depth and, therefore, provide the user with an immediate choice for the profile of the gap. This further increases the easiness and speed of using the method by the user, further enhancing the ergonomics of the method.

The method may further include a list of possible profiles (and the associated parameters). These profiles may be the best-known profiles for specific uses and/or manufacturing constraints. Therefore, the user may, thanks to the method, choose a best profile for the given use and/or manufacturing constraints.

The specifications comprise a radius of a connection between the surface and flanges of the gap. A radius of a connection is a radius of a fillet that is used in a fillet operation downstream in the method. The fillet operation is executed at the intersection between the surface and the flanges, to connect the surface with the flanges. As is well-known in the art, fillets are important parts of a design, improving manufacturability, simplifying machining processes, extending product life, and facilitating easier part alignment during assembly.

The method further comprises sweeping the profile along the shape. Sweep, as well-known in the art, is a geometric modeling technique used to create three-dimensional shapes by translating a two-dimensional profile along a specified path. In the case of the method, the profile is the profile of the gap, and the specified path is the shape. Therefore, the method may include attaching the profile of the gap at any point of the shape and sweeping the profile along the shape.

The profile of the gap may, for example, be a curve in a plane. Such curve may have the extremal points at the same height in the plane. The method may, therefore, include attaching the profile to the surface at any point of the shape in such a way that
- the profile lies in a plane orthogonal to the shape at the said point; and
- that the extremal points of the profile lie on the surface.

Afterwards the method may include sweeping the profile along the shape while satisfying the above conditions at every point. The method may, therefore, comprise a change of reference frame to bring the profile into a plane. The plane may pass through one or the endpoints of the shape (e.g., of a guide comprised in the shape, of a trajectory comprised in the shape, or of a curve comprised in the shape). The normal of the plane may be tangent to the shape at the endpoint. The orientation may be defined by positioning the two endpoints of the profile on the surface.

The method further comprises connecting the result of the sweep to the surface by applying a fillet operation. The fillet operation has as radius the provided radius. The fillet operation may include a trim operation. The fillet operation adds a fillet between the surface and the flanges of the gap along the shape of the gap. The trim operation may remove a portion of the surface along the shape. Specifically, the trim operation may remove the portion of the surface which lies above the gap. Such a trim operation is illustrated, e.g., in FIG.s 5-6. The trim operation may also remove the portion of the surface which lies above the fillet portions that connect the flanges to the surface. In other words, the fillet operation may first create fillet connections between the flanges and the surface and may then automatically followed (e.g., automatically calls) a trim operation that remove the unnecessary portion of the surface that still covers the gap and fillet connection. This may be the case when the method does not determine the two parallel curves as discussed herein. In the case when the method determines the two parallel curves, the method may first comprise the trim operation that removes (trims) the part comprises between the two parallel curves, and then the fillet connection between the flanges and the (trimmed) surface, as further discussed hereinafter. These alternative trims are illustrated on FIG.s 28 to 30 (for the trim after fillet connection) and FIG.s 31 to 33 (for the trim before fillet connection, between the two parallel curves). In both cases, the trim operation removes the part of the surface that lies above the gap.

The result of the fillet operation is the surface with the formed gap. The output of the method may be outputted to the user, for example through a graphic interface (e.g., a display), may be further modified and/or may directly sent to a manufacturing process.

The method may also include, prior to sweeping, determining, for each given curve included in the shape (that is for each shape-curve), two additional curves that are both parallel to the given curve (and, necessarily, parallel to each other). The method may include any known method in the art to determine the parallel curves. Then, the sweep operation may use the two parallel curves as guides. For example, the profile may be a curve in a plane with two extremal points at the same height, and the method may include sweeping the profile in such a way the extremal points of the profile always lie in the parallel curves. Furthermore, the method may also include trimming a portion of the surface delimited by the two additional parallel curves as part of the fillet operation.

In specific examples, using the two parallel curves as guides may give a more stable solution and may give better control of the sweep operation. Indeed, the user may have a more direct access on the parts of the surface that are trimmed (i.e., the portion of the surface in between the parallel curves) and the curves of contact between the surface and the flanges of the gap (i.e., the parallel curves).

In examples, the surface with the formed gap obtained with the method may be connected. For example, the surface may be connected, and the profile may be a curve with two extremal points that are at the same height and the surface with the formed gap obtained according to the method may be connected. An example of a connected surface with a gap is shown in FIG. 19.

As it may be important for designing, and later for the manufacturing step, to give different properties (e.g., material, thickness) to each of the surfaces delimited by the shape of the gap, a further step may be required in the method. The method may further comprise separating the result of the fillet operation (i.e., the surface with the formed gap) into surfaces each comprising a respective flange of the gap. The separation may consist in removing a bottom portion of the gap.

Removing the bottom portion of the gap may disconnect the surface along the shape. The bottom portion of the gap may be present in the surface only for design reasons and may not be intended for the manufacturing process. After separation, a multitude of surfaces may be obtained, each of which delimited by either the flanges of the gap or the boundary of the input surface. Each of these surfaces may be considered as a distinct object by the program (e.g., in the spec tree and/or feature tree) and therefore they may have different properties. One or more of the obtained surfaces may be modified, removed, moved, according to the design. However, this multitude of surfaces may still be linked to the original surface, so that any change in the original surface may, automatically, induce changes in the multitude of surfaces.

In examples, removing the bottom portion of the gap may be achieved by removing the bottom portion of the profile of the gap and all the geometries generated by it. Indeed, in examples, the profile of the gap may have a bottom portion and after removing the bottom portion of the profile of the gap, the profile of the gap may become disconnected (e.g., U-shape, wherein the bottom portion is the half circle). Therefore, in such examples, the bottom portion of the gap may consist of all the geometric object obtained by applying all the operations executed during the method (e.g., the sweep operation; the operations may be stored in the dataset, e.g., the modifier, or a history of all the operations, e.g., a topological journal) to the bottom portion of the profile of the gap. Therefore, after removing the bottom portion of the profile of the gap, the method may automatically update the surface by removing the bottom portion of the gap.

The operation of separation may be part of an operation Convert to Geometry. FIG. 38A illustrates a surface that is separated by gaps 3801 into four different surfaces 3802-3805). FIG. 38B shows a possible user-menu to apply the Convert to Geometry operation. This menu may, for example, be obtained by right-clicking with the mouse on the surface.

Implementations of the different steps of the method are now discussed. These implementations may be combined, and any combination of implementations discussed hereinbelow may be contemplated.

Implementations of the process of creation of the provided profile based on gap parameters set by the user are now presented. In the implementations, the user selects first a type of profile, such as U-shape or V-shape, or any other profile such as the profiles of FIG. 25. The selection may be made from a list, through a menu or any method known in the art. The profile may be a connected curve without auto-intersection in a plane with two extremal points at the same height in the plane.

Depending on the type of profile chosen, the user is required to input one or more parameters and/or choose to accept the default parameters. For example, if the user selects U-shape or V-shape, then the user may be required to input two parameters, thickness and depth.

FIG. 26 illustrates the case of a profile of the kind U-shape. The user is required to give as an input a thickness and a depth. Afterwards, the implementations create a first line, Line.1 of FIG. 26, in a plane with length L=depth-thickness x 0.5 and a second line Line.2 as an offset of Line.1 along the horizontal direction of the plane at distance D = thickness. Then the implementations create a half a circle in this plane with center C at the middle of the lower extremal points of Line.1 and Line.2 with radius R = thickness x 0.5. The so obtained curve is the profile of the gap. The profile so obtained is G1 connected. If the profile of the gap is smooth (as a curve), the surface with the gap formed according to the method may be smooth. The smoothness of the surface may be beneficial for further applying operators and methods to the obtained surface.

In the case of V-shape, a similar process may be implemented, where two lines are created, starting from points at the same height at distance equal to the thickness and they are joined at the bottom at a single point. In this case, the profile is not smooth, and the method may further modify the V-shape to make it smooth.

Implementations may flag a part of the curve as "bottom of the gap". This part of the curve may be, for example, the half a circle in the case of the U-shape, or the bottom joining point in the case of V-shape. The bottom of the gap may be any part of the profile that disconnects the profile into two parts.

Flowcharts of an implementation of the method and an implementation of the method when it comprises the determination of two parallel curves that was previously discussed are illustrated in FIG. 17 and FIG. 18, respectively.

In both implementations, the providing specifications of the gap comprises:
- zero or more 1D Inputs (e.g., 0,1,2, or more), that is zero or more curves;
- a choice of a direction of a projection (not shown in the figures);
- zero or more 2D Inputs (e.g., 0,1,2, or more), that is zero or more surfaces;
- a Main Shape, which is a surface on which a gap is to be formed; and
- a Profile Creation (including thickness and the choice of fillet radius).

Both implementations include a step Join (1) in which the zero or more 1D Inputs are joined, forming Joined Body1. Then, Joined Body1 is projected onto the Main Shape with the chosen projection (e.g., sight direction during creation or normal direction). An error may be prompted to the user if the projection of a curve comprising Joined Body1, that is one of the 1D Inputs, may not be used in the implementation. For example, an error may be prompted if the projection of a curve:
- is empty, that is, said curve projects outside of the Main Shape;
- is a point, that is, the curve follows the direction of the projection.

The list of type of 1D Inputs causing the implementation to prompt an error may be larger. In any case, each 1D Input causing an error is ignored for all the following steps. The implementations continue after discarding this input. However, the discarded input may be considered again after modifying any of the inputs.

The curves obtained as projections are collected in Trace Body1.

In parallel, both implementations include a step Join (2) in which the zero or more 2D Inputs are joined, forming Joined Body2. Then, Joined Body2 is intersected with the Main Shape. An error is prompted to the user if the intersection of a surface comprising Joined Body2, that is one of the 2D Inputs, with the Main Shape may not be used in the implementation. For example, an error may be prompted if the intersection:
- is empty, that is, said surface is disjoint from the Main Shape;
- is either a finite number of points or 2-dimensional.

The list of types of 2D Inputs causing the implementation to prompt an error may be larger. In any case, each 2D Input causing an error is ignored for all the following steps. The implementations continue after discarding this input. However, the discarded input may be considered again after modifying any of the inputs.

The curves obtained as intersections are collected in Trace Body2.

Then, both implementations include a step Join (3), in which Trace Body1 and Trace Body2 are joined to form a Guiding Body. The Guiding Body is the shape of the gap consisting entirely of curves lying on the surface. The implementations may further comprise an optional step of extending each curve in the Guiding Body that has extremal points inside the Main Shape to a curve with extremal points on the boundary using geodesics (not shown in FIG. 17). For example, the extension can be done with geodesics starting at said extremal points with tangent vector the tangent vector of the curve at these points.

In parallel to the above, both implementations include a step of creation of a profile of the gap. This may be done according to any implementation, for example the implementation presented above. In any case, a Profile Body (i.e., a profile of the gap) is created. The Profile Body is a curve in a plane with two extremal points at the same height in the plane and without auto-intersections.

The two implementations differ on the succeeding steps.

The flowchart of the first implementation, the implementation of the method, is illustrated in FIG. 17.

The first implementation includes, after the creation of the Guiding Body, applying the Sweep operation, i.e., sweeping the profile along the shape. As input, the Sweep operation takes the Guiding Body and the Profile Body. In the implementation the curves comprising the Guiding Body may be considered one by one. Alternatively, the implementation may first check all the intersections of the curves in the Guiding Body and apply the operations below in parallel for non-intersecting curves.

For each curve in the Guiding Body, the implementation comprises selecting an input anchor point. The input anchor point is a point in the curve that may be selected by the user or may be determined automatically by any method in the implementation. For example, the input anchor point may be the center of a curve, if said curve has two extremal points, or any other chosen point. The anchor point may be the point with a lowest coordinate.

Then the implementation includes executing a Sweep operation so that the profile of the gap is swept along the curve. In particular, the implementation comprises attaching the profile of the gap to the input anchor point in such a way that:
- the plane of the profile is perpendicular to the curve;
- the two extremal points of the profile lie on the surface; and
- the input anchor point is the middle point of said extremal points.

Attaching the profile of the gap may also comprise a change of reference frame to bring the profile into a plane, as explained above in the present application. The Sweep operation comprises sweeping the profile along the curve in such a way that the above conditions are satisfied at each point of the curve. If at any point, and for any reason, the Sweep operation cannot be executed or fails, an error is prompted to the user and the associated curve in the Guiding Body is ignored for all the following steps. The implementation continues after discarding the curve.

The implementation further comprises, after the Sweep operation, storing the obtained output, that is, the union of all these swept profiles, in the Swept Body. By construction, this is a union of surfaces and meets the Main Shape along the Guiding Body.

The implementation further comprises a Fillet operation between the Main Shape and the Swept Profile with respect to the radius entered in the Profile Creation step. The Fillet operation creates a new surface, denoted Gap Body, from the Main Shape and the Swept Body. The Fillet is executed along the Guiding Body, that is, along the intersection of the Main Shape with the Swept Body. The Fillet operation includes the Trim Support, to trim a part of the surface including the part in between the extremal points of the swept profiles forming the Swept Body.

If at any point, and for any reason, the Fillet operation cannot be executed, an error is prompted to the user and the associated curve in the Guiding Body is ignored for all the following steps. The implementation continues after discarding the curve.

In FIG.s 27-30, the steps of Sweep and of Fillet are illustrated. FIG. 27 shows a curve 2703 in the Guiding Body. The profile of the gap (i.e., Profile Body) is illustrated as a U-shape 2702. FIG. 27 shows the Sweep operation 2701 used to sweep the profile in such a way that the two extremal points always lie on the surface. FIG. 28 illustrates a side view of the Main Shape 2802, the profile of the gap 2702 and the swept surface 2801, that is the union of the Main Shape and the Swept Body. FIG. 29 illustrates the Fillet operation between the Main Shape and the flanges of the profile of the gap to create the fillets 2901. FIG. 30 illustrates the Trim support 3001 of the Fillet operation to remove the part of the surface in between the profile of the gap.

The result, the Gap Body, is prompted to the user. It is the Main Shape with the gap formed according to the user specifications.

The second implementation, the implementation of the method with parallel curves is illustrated in FIG. 18. It is understood in FIG. 18 that, at each step, all the operations and constructions done to the original surface are stored to constitute a dataset denoted Topo Journal (i.e., topological journal).

The second implementation comprises, after the creation of the Guiding Body, a step Parallel Curves of determining two parallel curves for each given curve in the Guiding Body. The parallel curves are necessarily also parallel to each other. The parallel curves are created at a distance equal to the thickness (e.g., both at a distance equal half the thickness from the given curve) entered during the Profile Creation. For this, the implementation may use geodesic mode. If at any point, and for any reason, the Parallel Curves operation cannot be executed or fails, then an error is prompted to the user, the given curve is ignored for all the following steps. The implementation continues after discarding the input. All the parallel curves are stored in Parallel Body1 and Parallel Body2, so that each curve in Parallel Body1 is parallel to (at least) a curve in Parallel Body2 and in Guiding Body. The implementation may comprise determining the parallel curves of disjoint parallel curves in parallel.

Then, the implementation comprises choosing an anchor point for each given curve, as, for example, in the previous implementation. Then, the implementation includes a Sweep Two guides step to sweep the Profile Body along the curve, i.e., sweeping the profile along the shape.

In particular, similar to the implementation of the method, the implementation includes attaching the profile of the gap to the input anchor point in such a way that:
- the plane of the profile is perpendicular to the curve; and
- each of the two extremal points of the profile lie on a corresponding parallel curve.

Attaching the profile of the gap may also comprise a change of reference frame to bring the profile into a plane, as explained above in the present application. The Sweep Two guides operation comprises sweeping the profile along the two parallel curves in such a way that the above conditions are satisfied at each point of the curve. If at any point, and for any reason, the Sweep Two guides operation cannot be executed or fails, then an error is prompted to the user, the given curve is ignored for all the following steps. The implementation continues after discarding the curve.

The implementation further comprises, after the Sweep Two guides, storing the object obtained (comprising both the Main Shape and the swept Profile Body) in the Swept Body.

The implementation further comprises a Trim operation designed to trim, for each given curve in the Guiding Body, the portion of the surface in between the two generated parallel curves. If at any point, and for any reason, the Trim operation cannot be executed or fails, then an error is prompted to the user, the given curve is ignored for all the following steps. The implementation continues after discarding the curve.

The trimmed object is called Trim Body. The implementation also includes attaching to the Trim Body all the history of operations and constructions done to the original surface to obtain the Trim Body. These operations and constructions constitute a dataset denoted Topo Journal (i.e., topological journal).

Finally, the implementation includes an Edge Fillet operation to produce a fillet along each parallel curve in Parallel Body1 and Parallel Body2 with the surface. In this second implementation, the operation of Edge Fillet (instead of shape fillet) may be preferred, as it may handle better the intersection of the traces. Again, if at any point, and for any reason, the Edge Fillet operation cannot be executed or fails, then an error is prompted to the user, the given curve is ignored for all the following steps. The implementation continues after discarding the curve.

In FIG.s 31-33, the steps of Sweep Two guides, of Trim and of Edge Fillet are illustrated. FIG. 31 illustrates the two parallel curves 3103 in Parallel Body1 and Parallel Body2 respectively. The profile of the curve is shown as a U-shape 3102 and the sweep operation is used 3101 to sweep the profile in such a way the extremal points of the profile lie in the two parallel curves. FIG. 32 illustrates the Swept Body 3203 and the Main Surface 3201 from a side view. FIG. 32 also illustrates the Trim operation, the portion of the surface in between the two parallel curves 3202 is removed. Finally, FIG. 33 shows the Fillet operation, the fillets 3301 are created between the surface and the flanges of the profile of the gap.

The result, the Gap Body, is prompted to the user. It is the Main Shape with the gap formed according to the user specifications.

Both the above implementations have several advantages:
- many of the steps of the implementations may be done in parallel, optimizing the computing time; the implementations may be designed to use several different cores of the CPU at the same time and/or the GPU;
- the implementations may be used with any kind of surface and it is independent of the topology of the shape (e.g., it is not linked to any mesh);
- the implementations may always give a surface as an output; in case of errors the implementations may give as an additional output which input at which step causes the error; and
- all operations may be automatically performed and recorded; whenever any of the input is modified the method may, in real time, modify the output.

In specific examples, the second implementation may be more stable than the first.

Implementations of the step of Convert to Geometry (i.e., separating a surface with gap formed along the shape of the gaps) are described. The input of the implementations is a Gap Body obtained according to any of the two previously described methods, wherein during the Profile Creation, a bottom of the curve is flagged. The Gap Body includes a journal of all the operations executed (and the order of execution), like a topological journal. As described above, a bottom of the curve is a part of the profile of the gap that disconnect the profile of the gap into two parts, for example disconnect the two flanges of the gap.

Whenever the user executes the command Convert to Geometry, the implementation removes the bottom of the profile of the gap and follows all the topological actions executed by the previous implementation (e.g., stored in the topological journal) to transform the Main Shape to the Gap Body, using the profile of the gap without the bottom of the profile of the gap. This creates a disconnected surface.

This implementations are presented in detail in FIG.s 34-37. The operation of separation may be a purely topological operation. In FIG. 34 a profile of the gap is illustrated as a U-shape, with flanges 3401 and a bottom of the profile of the gap 3402 consisting of half a circle. FIG 35 illustrates a portion of the result of the operation of sweeping. The operation of sweeping applied to 3402 gives the bottom of the gap 3501: this is a collection of faces (i.e., 2-dimensional geometric objects) that are obtained through the history of all executed operations (e.g., from the Sweep operation stored in the topological journal) applied to 3402. In FIG. 36 the surface 3601 comprising the gap is illustrated including both the swept bottom of the gap 3501 and the swept flanges 3602. Afterwards, the bottom of the gap 3501 may be removed. This, for example, may be achieved by calling an extract topo operator with "complementary mode". This operator retrieves all the other faces and generates a multi-domain body containing all sets of connected faces. In FIG. 37, the separation is indicated at 3703 and the piece of the surface is separated into two parts 3701 and 3702. For each of these new surfaces, a new body may be created, and the new body may be pointed by a feature to host it. These new bodies may always keep a link with the original feature (i.e., the Main Surface).

It is further provided a computer-implemented data structure (e.g., stored in a (e.g., non-transitory) computer-readable data storage medium). The data structure comprises specifications of a gap. The specifications form semantic data associated to data defining a surface representation of a surface portion of a product to be manufactured. The specifications comprise a radius of a connection between the surface and flanges of the gap, a profile of the gap, and a shape defining the gap on the surface.

Specifically, a surface may be defined by different features, for example by equations, parameters or control points, operations applied to the surface, joining of different surfaces, or any combination thereof as well-known in the art. These features may form a part of a dataset expressing the computer-definition of the surface (e.g., in a modeled object defining the product and/or the surface). The data structure discussed above is a computer object to be added to the computer-definition of the surface. The data structure may, for example, be a "modifier" as previously discussed, which is a semantic supplementary data associated with a modeling object (like the surface) and may be formed by a stack operations and geometric types to be added to an untyped object. Adding the data structure to the computer-definition of the surface may correspond to the step of providing the specifications of the method discussed herein, upon which the further steps of the method may be executed. The data structure is thus a computer object to be added to the computer-definition of a surface so as to create a gap on the surface according to the method discussed herein.

The specifications of the gap may be also added to the dataset (e.g., the modifier). Furthermore, the modifier may also contain all the operations applied to the surface, and in particular those of the steps of the method discussed herein to form the gap on the surface (e.g., the operations executed in any of the above implementations).

Storing the specifications as intrinsic property may have a significant impact in terms of efficiency. Indeed, different objects (e.g., disjoint objects) may be processed in parallel. Moreover, the modifiers of an object may also be optimized according to any method known in the art. Therefore, storing the information relative to the gap in a data structure consisting of semantic data implies a great advantage in terms of computation when a plurality of object (at least one of which with a gap) are present in the same model (e.g., a spec tree and/or feature tree). As many products to be manufactured consist in several parts, each of which may have gaps, the data structure provides a better way of storing the information and to optimize the computation done by the CPU and/or GPU. Moreover, storing the data in the modifier further simplifies the spec tree and/or the feature tree of the model, making it easier to navigate and understand. This may allow the user to spend less time in navigating the spec tree and/or the feature tree, reducing the number of clicks and user-interactions necessary to complete the model. This further increases ergonomics.

Moreover, as the specification of the gap may be stored as semantic data of a surface, they are easier to access (as the intrinsic properties of the surface) and modify.

The method may also comprise obtaining a plurality of inputs (e.g., a plurality of profiles and/or specifications of gaps) and optimizing the required steps to reduce the number of operations required to obtain a surface with the plurality of gaps formed. For example, FIG. 18 illustrates three instances of such an optimizing step: the steps Join (1), Join (2), and Join (3) effectively reduce the computation time to obtain a surface with the plurality of gaps formed. The method may also comprise a meta-operator for handling a plurality of profiles and/or specifications at the same time. For example, all the input modifiers may be read from the meta-operator and processed at the same time. For example, a multi-domain body may be included, the multi-domain body pointing to all profiles and/or specifications. For example, the sweeping of the profile may process the whole multi-domain profile at once to generate multi-domain shells for the swept result. For example, the fillet operation may be processed on the multi-domain data. Such optimizing steps may decrease the number of operations to be performed, instead of having an operation for each input data. Therefore, such an optimizing step would greatly enhance the performance whenever a plurality of inputs is given.

FIG.s 39 to 56 are screenshots illustrating implementations of the method. These figures illustrate the method and advantages thereof. FIG. 39 shows a surface 3901 with a gap 3902. Such a gap is computed according to the method. The curve 3903 is inputted by the user to determine the shape of the gap. Specifically, the curve 3903 has been projected onto the surface to obtain a closed curve lying on the surface. Said curve lying on the surface is the shape of the gap. FIG. 40 illustrates the same surface from a side point of view. In FIG. 40, the spec tree (specification tree)/feature tree of the surface 4001 is visible.

Then the user proceeds to modify the shape of the gap. For this, in FIG. 41, the user selects 4101 (with the cursor of the mouse) two control points 4102. The control points control the shape of the curve 3903. Therefore, by modifying the control points 4102, the user modifies the curve 3903 and hence its projection onto the surface, that is, the shape of the gap. In FIG. 42 the control curve 3903 is modified along the segment 4201. Then the gap is recomputed according to the new shape, by executing the method. FIG. 43 illustrates the result: the gap 3902 has been recomputed and its shape follows the new specification induced by the curve 3903. FIG. 44 illustrates a side view of FIG. 43.

FIG. 45 illustrates a surface and a gap 4501. The gap is selected in the spec tree/feature tree and in the user interface the parameters of the gap are shown on the left. In particular, the parameter regarding the thickness of the gap is selected and a user-interface 4502 is visible. Such a user interface may be used to modify the thickness of the gap. The thickness is modified, and the result is shown in FIG. 46. The gap 4501 in FIG. 46 is much thicker than the same gap in FIG. 45. FIG. 47 is a zoomed version of FIG. 46; the same gap can be seen from a close perspective.

FIG. 48 illustrates a surface with a gap from a close angle, where the flanges of the gap can be seen. In FIG. 48, a double-headed arrow 4801 is used to measure the depth of the gap. FIG. 49 illustrates the same surface with a gap following the same shape from the same angle. The difference between FIG. 49 and FIG. 48 is that the specifications of the gap have been changed: the depth of the gap has been reduced in FIG. 49. Indeed, the double-headed arrow 4901 of FIG. 49 is much shorter than 4801.

FIG.s 50-56 illustrate a model of a car body. FIG. 51 shows a closed angle of said car, where a control curve 5101 can be seen. This control curve is projected onto the surface (that is, the model of the car) to obtain a shape of a gap. The gap 5102 has been obtained according to the present method. The gap 5102 is delimiting a bonnet of said model of the car. Then the user proceeds to modify the shape of the gap. For this, in FIG. 52, the user selects 5201 (with the cursor of the mouse) two control points 5202 that control the shape of the curve 5101. These control points are moved along the direction 5301 of FIG. 53.

The result is illustrated in FIG. 54. The gap has been (automatically, according to the method) modified at the location 5401, according to the projection of the control curve. A second modification of the control curve is induced in FIG. 55. The control curve is modified along the direction 5501 and the control points are moved by the segment 5502. The result of both modifications of the gap is shown in FIG. 56, wherein the second modification can be seen at 5601. The bonnet of the car has been modified.

These screenshots illustrate how easy is to modify the specifications of the gap according to the method. This may be done, for example, by modifying the corresponding parameters or control points. The computations are executed in real time and the result appears on the screen immediately (that is, after a very short period of time, such as a few seconds) on the screen. The modified gap can again be modified afterwards.

"Designing a manufacturing product (or a product to be manufactured)/mechanical part/mechanical product" designates any action or series of actions which is at least a part of a process of elaborating a modeled object (3D or 2D) of the manufacturing product/mechanical part/mechanical product. The method may form such a process or may form at least a part of the process, as previously explained.

The method thus generally manipulates modeled objects, such as the surface contemplated in the method A modeled object is any object defined by data stored e.g. in the database. By extension, the expression "modeled object" designates the data itself. According to the type of the system, the modeled objects may be defined by different kinds of data. The system may indeed be any combination of a CAD system, a CAE system, a CAM system, a PDM system and/or a PLM system. In those different systems, modeled objects are defined by corresponding data. One may accordingly speak of CAD object, PLM object, PDM object, CAE object, CAM object, CAD data, PLM data, PDM data, CAM data, CAE data. However, these systems are not exclusive one of the other, as a modeled object may be defined by data corresponding to any combination of these systems. A system may thus well be both a CAD, CAE, PLM and/or CAM system, as will be apparent from the definitions of such systems provided below.

By CAD solution *(e.g.* a CAD system or a CAD software), it is additionally meant any system, software or hardware, adapted at least for designing a modeled object on the basis of a graphical representation of the modeled object and/or on a structured representation thereof (e.g. a feature tree), such as CATIA. In this case, the data defining a modeled object comprise data allowing the representation of the modeled object. A CAD system may for example provide a representation of CAD modeled objects using edges or lines, in certain cases with faces or surfaces. Lines, edges, or surfaces may be represented in various manners, e.g. non-uniform rational B-splines (NURBS). Specifically, a CAD file contains specifications, from which geometry may be generated, which in turn allows for a representation to be generated. Specifications of a modeled object may be stored in a single CAD file or multiple ones. The typical size of a file representing a modeled object in a CAD system is in the range of one Megabyte per part. And a modeled object may typically be an assembly of thousands of parts.

In the context of CAD, a modeled object may typically be a 2D or 3D modeled object, e.g. representing a product such as a part or an assembly of parts, or possibly an assembly of products. The 2D or 3D modeled object may be a manufacturing product, *i.e.* a product to be manufactured. By "3D modeled object", it is meant any object which is modeled by data allowing its 3D representation. A 3D representation allows the viewing of the part from all angles. For example, a 3D modeled object, when 3D represented, may be handled and turned around any of its axes, or around any axis in the screen on which the representation is displayed. This notably excludes 2D icons, which are not 3D modeled. The display of a 3D representation facilitates design (i.e. increases the speed at which designers statistically accomplish their task). This speeds up the manufacturing process in the industry, as the design of the products is part of the manufacturing process.

The 2D or 3D modeled object may represent the geometry of a product to be manufactured in the real world subsequent to the completion of its virtual design with for instance a CAD/CAE software solution or CAD/CAE system, such as a (e.g. mechanical) part or assembly of parts (or equivalently an assembly of parts, as the assembly of parts may be seen as a part itself from the point of view of the method, or the method may be applied independently to each part of the assembly), or more generally any rigid body assembly (e.g. a mobile mechanism). A CAD/CAE software solution allows the design of products in various and unlimited industrial fields, including: aerospace, architecture, construction, consumer goods, high-tech devices, industrial equipment, transportation, marine, and/or offshore oil/gas production or transportation. The 3D modeled object designed by the method may thus represent an industrial product which may be any mechanical part, such as a part of a terrestrial vehicle (including e.g. car and light truck equipment, racing cars, motorcycles, truck and motor equipment, trucks and buses, trains), a part of an aerial vehicle (including e.g. airframe equipment, aerospace equipment, propulsion equipment, defense products, airline equipment, space equipment), a part of a naval vehicle (including e.g. navy equipment, commercial ships, offshore equipment, yachts and workboats, marine equipment), a general mechanical part (including e.g. industrial manufacturing machinery, heavy mobile machinery or equipment, installed equipment, industrial equipment product, fabricated metal product, tire manufacturing product), an electro-mechanical or electronic part (including e.g. consumer electronics, security and/or control and/or instrumentation products, computing and communication equipment, semiconductors, medical devices and equipment), a consumer good (including e.g. furniture, home and garden products, leisure goods, fashion products, hard goods retailers' products, soft goods retailers' products), a packaging (including e.g. food and beverage and tobacco, beauty and personal care, household product packaging).

A CAD system may be history-based. In this case, a modeled object is further defined by data comprising a history of geometrical features. A modeled object may indeed be designed by a physical person (i.e. the designer/user) using standard modeling features (e.g. extrude, revolute, cut, and/or round) and/or standard surfacing features (e.g. sweep, blend, loft, fill, deform, and/or smoothing). Many CAD systems supporting such modeling functions are history-based system. This means that the creation history of design features is typically saved through an acyclic data flow linking the said geometrical features together through input and output links. The history based modeling paradigm is well known since the beginning of the 80's. A modeled object is described by two persistent data representations: history and B-rep (i.e. boundary representation). The B-rep is the result of the computations defined in the history. The shape of the part displayed on the screen of the computer when the modeled object is represented is (e.g. a tessellation of) the B-rep. The history of the part is the design intent. Basically, the history gathers the information on the operations which the modeled object has undergone. The B-rep may be saved together with the history, to make it easier to display complex parts. The history may be saved together with the B-rep in order to allow design changes of the part according to the design intent.

By PLM system, it is additionally meant any system adapted for the management of a modeled object representing a physical manufactured product (or product to be manufactured). In a PLM system, a modeled object is thus defined by data suitable for the manufacturing of a physical object. These may typically be dimension values and/or tolerance values. For a correct manufacturing of an object, it is indeed better to have such values.

By CAE solution, it is additionally meant any solution, software of hardware, adapted for the analysis of the physical behavior of a modeled object. A well-known and widely used CAE technique is the Finite Element Model (FEM) which is equivalently referred to as CAE model hereinafter. An FEM typically involves a division of a modeled object into elements, i.e., a finite element mesh, which physical behaviors can be computed and simulated through equations. Such CAE solutions are provided by Dassault Systèmes under the trademark SIMULIA^{®}. Another growing CAE technique involves the modeling and analysis of complex systems composed a plurality of components from different fields of physics without CAD geometry data. CAE solutions allow the simulation and thus the optimization, the improvement and the validation of products to manufacture. Such CAE solutions are provided by Dassault Systèmes under the trademark DYMOLA^{®}. CAE may be used to ensure that various structural requirements (such as, but not limited to, mass, stiffness, strength, durability) are achieved by a new CAD model. Some of these requirements may be called Key Performance Indicators (KPIs). For many industrial products (for example cars, airplanes, consumer packaged goods, hi-tech), these KPIs are in conflict e.g. lower mass usually causes lower stiffness. Thus, optimization methods are often applied to find the best trade-off between the KPIs.

By CAM solution, it is meant any solution, software of hardware, adapted for managing the manufacturing data of a product. The manufacturing data generally include data related to the product to manufacture, the manufacturing process and the required resources. A CAM solution is used to plan and optimize the whole manufacturing process of a product. For instance, it may provide the CAM users with information on the feasibility, the duration of a manufacturing process or the number of resources, such as specific robots, that may be used at a specific step of the manufacturing process; and thus allowing decision on management or required investment. CAM is a subsequent process after a CAD process and potential CAE process. For example, a CAM solution may provide the information regarding machining parameters, or molding parameters coherent with a provided extrusion feature in a CAD model. Such CAM solutions are provided by Dassault Systèmes under the trademarks CATIA, Solidworks or trademark DELMIA^{®}.

CAD and CAM solutions are therefore tightly related. Indeed, a CAD solution focuses on the design of a product or part and CAM solution focuses on how to make it. Designing a CAD model is a first step towards a computer-aided manufacturing. Indeed, CAD solutions provide key functionalities, such as feature based modeling and boundary representation (B-Rep), to reduce the risk of errors and the loss of precision during the manufacturing process handled with a CAM solution. Indeed, a CAD model is intended to be manufactured. Therefore, it is a virtual twin, also called digital twin, of an object to be manufactured with two objectives:
- checking the correct behavior of the object to be manufactured in a specific environment; and
- ensuring the manufacturability of the object to be manufactured.

The modeled object outputted/designed/processed/taken as input by the method may alternatively be a CAD model, for example comprising or consisting in a feature tree and/or a B-rep. Such a model may stem from a CAE model and may results from a CAE to CAD conversion process, that the method may for example comprise at an initial stage.

The CAD model may be feature-based (e.g. it may comprise a feature tree, and optionally a corresponding B-rep obtained by executing the feature tree). A feature-based 3D model allows (e.g. during the determination of a manufacturing file or CAM file as discussed hereinafter) the detection and an automatic resolution of a geometry error in a CAD model such as a clash that will affect the manufacturing process. A clash is an interpenetration between two parts of a 3D model for example due to their relative motion. Furthermore, this clash may sometimes only be detected via a finite element analysis based on the CAD feature-based model. Therefore, a resolution of a clash can be performed with or automatically by the CAD solution by iteratively modifying the parameters of the features and doing a finite element analysis.

As another example, a feature-based 3D model allows (e.g. during the determination of a manufacturing file or CAM file as discussed hereinafter) an automatic creation of a toolpath for a machine via a computer numerical control (CNC). With CNC, each object to be manufactured gets a custom computer program, stored in and executed by the machine control unit, a microcomputer attached to the machine. The program contains the instructions and parameters the machine tool will follow. Mills, lathes, routers, grinders and lasers are examples of common machine tools whose operations can be automated with CNC.

A key characteristic of a CAD model is that it may be designed exactly and unambiguously by chaining a small number of high-level parameterized design operations (including for example, but not limited to, sketch, extrusion, chamfer) and edited by modifying its high-level parameters. That this is a key distinction with the polyhedral representations such as a triangular surface mesh which may represent any 3D shape but do not provide modification or parameterization capabilities required in an industrial design context.

As CAD model is a parameterized model of a part/product, it is lighter in terms of memory footprint than other models such as a CAE model. Indeed, instead of storing a collection of discrete geometrical elements such as finite elements, a CAD model allows the storing of a list of features and parameters, which is lighter in terms of storage and memory footprint. Working on CAD models thus reduced memory requirements for the underlying systems, as compared for example to CAE models, in addition to facilitate editability of the model. This amounts to say that a CAE to CAD conversion process in fact compresses the CAE model into a CAD model which is lighter in terms of memory requirements (e.g. footprint), in addition to transforming the CAE model into a more easily editable CAD model.

The generation of a custom computer program from CAD files may be automated. Such generation may therefore be errorproof and may ensure a perfect reproduction of the CAD model to a manufactured product. CNC is considered to provide more precision, complexity and repeatability than is possible with manual machining. Other benefits include greater accuracy, speed and flexibility, as well as capabilities such as contour machining, which allows milling of contoured shapes, including those produced in 3D designs.

The B-rep (i.e. boundary representation) is a 3D representation of a mechanical part. Specifically, the B-rep is a persistent data representation describing the 3D modeled object representing the mechanical part. The B-rep may be the result of computations and/or a series of operations carried out during a designing phase of the 3D modeled object representing the mechanical part. The shape of the mechanical part displayed on the screen of the computer when the modeled object is represented is (e.g. a tessellation of) the B-rep. In examples, the B-rep represents a part of the model object.

A B-Rep includes topological entities and geometrical entities. Topological entities are: face, edge, and vertex. Geometrical entities are 3D objects: surface, plane, curve, line, point. By definition, a face is a bounded portion of a surface, named the supporting surface. An edge is a bounded portion of a curve, named the supporting curve. A vertex is a point in 3D space. They are related to each other as follows. The bounded portion of a curve is defined by two points (the vertices) lying on the curve. The bounded portion of a surface is defined by its boundary, this boundary being a set of edges lying on the surface. The boundary of the edges of the face are connected by sharing vertices. Faces are connected by sharing edges. Two faces are adjacent if they share an edge. Similarly, two edges are adjacent if they share a vertex. In the CAD system, the B-Rep gathers in an appropriate data structure the "is bounded by" relationship, the relationship between topological entities and supporting geometries, and mathematical descriptions of supporting geometries. An internal edge of a B-Rep is an edge shared by exactly two faces. By definition, a boundary edge is not shared, it bounds only one face. By definition, a boundary face is bounded by at least one boundary edge. A B-Rep is said to be closed if all its edges are internal edges. A B-Rep is said to be open is it includes at least one boundary edge. A closed B-Rep is used to model a thick 3D volume because it defines the inside portion of space (virtually) enclosing material. An open B-Rep is used to model a 3D skin, which represents a 3D object the thickness of which is sufficiently small to be ignored.

A key advantage of the B-Rep over any other representation types used in CAD modeling is its ability to represent arbitrary shapes exactly. All other representations in use, such as point clouds, distance fields and meshes, perform an approximation of the shape to represent by discretization. The B-Rep, on the other hand, contains surface equations that represent the exact design and therefore constitutes a true "master model" for further manufacturing, whether this be generation of toolpaths for CNC, or discretizing into the correct sample density for a given 3D Printer technology. In other words, by using a B-Rep, the 3D model may be an exact representation of the manufactured object. The B-Rep is also advantageous for simulating the behavior of a 3D model. In terms of stress, thermal, electromagnetic or other analysis, it supports local refinement of the simulation meshes to capture physical phenomena, and for kinematics it supports true contact modeling between curved surfaces. Finally, a B-Rep allows a small memory and/or file footprint. First, because the representation contains surfaces based only on parameters. In other representations such as meshes, the equivalent surface comprises up to thousands of triangles. Second, because a B-Rep doesn't contain any history-based information.

The method may be included in a production process, which may comprise, after performing the method, producing a physical product corresponding to the modeled object designed/processed/outputted by the method. The production process may comprise the following steps:
- (*e.g.* automatically) applying the method, thereby obtaining the CAD model outputted by the method;
- using the obtained CAD model for manufacturing the part/product.

Using a CAD model for manufacturing designates any real-world action or series of action that is/are involved in/participate to the manufacturing of the product/part represented by the CAD model. Using the CAD model for manufacturing may for example comprise one or more of the following steps:
- editing the obtained CAD model;
- performing simulation(s) based on the CAD model or on a corresponding CAE model *(e.g.* the CAE model from which the CAD model stems, after a CAE to CAD conversion process), such as simulations for validation of mechanical, use and/or manufacturing properties and/or constraints *(e.g.* structural simulations, thermodynamics simulation, aerodynamic simulations);
- editing the CAD model based on the results of the simulation(s);
- optionally *(i.e.* depending on the manufacturing process used, the production of the mechanical product may or may not comprise this step), *(e.g.* automatically) determining a manufacturing file/CAM file *(e.g.* comprising manufacturing instructions for manufacturing the product represented by the CAD model and/or control instructions for the manufacturing process and/or for commanding the manufacturing process or manufacturing tool(s) thereof) based on the *(e.g.* edited) CAD model *(e.g.* the control instructions stem from the CAD file storing the CAD model and/or specifications of the CAD model), for production/manufacturing of the manufacturing product;
- sending the CAD file and/or the manufacturing file/CAM file to a factory in view of manufacturing the product represented by the CAD model; and/or
- *(e.g.* automatically) producing/manufacturing, based on the determined manufacturing file/CAM file or on the CAD model, the mechanical product originally represented by the model outputted by the method. This may include feeding *(e.g.* automatically) the manufacturing file/CAM file and/or the CAD file to the machine(s) performing the manufacturing process.

This last step of production/manufacturing may be referred to as the manufacturing step or production step. This step manufactures/fabricates the part/product based on the CAD model and/or the CAM file, e.g. upon the CAD model and/or CAD file being fed to one or more manufacturing machine(s) or computer system(s) controlling the machine(s). The manufacturing step may comprise performing any known manufacturing process or series of manufacturing processes, for example one or more additive manufacturing steps, one or more cutting steps (e.g. laser cutting or plasma cutting steps), one or more stamping steps, one or more forging steps, one or more bending steps, one or more deep drawing steps, one or more molding steps, one or more machining steps (e.g. milling steps) and/or one or more punching steps. Because the design method improves the design of a model (CAE or CAD) representing the part/product, the manufacturing and its productivity are also improved.

Editing the CAD model may comprise, by a user *(i.e.* a designer), performing one or more editions of the CAD model, *e.g.* by using a CAD solution. The modifications of the CAD model may include one or more modifications each of a geometry and/or of a parameter of the CAD model. The modifications may include any modification or series of modifications performed on a feature tree of the model *(e.g.* modification of feature parameters and/or specifications) and/or modifications performed on a displayed representation of the CAD model *(e.g.* a B-rep). The modifications are modifications which maintain the technical functionalities of the part/product, *i.e.* the user performs modifications which may affect the geometry and/or parameters of the model but only with the purpose of making the CAD model technically more compliant with the downstream use and/or manufacturing of the part/product. Such modifications may include any modification or series of modification that make the CAD model technically compliant with specifications of the machine(s) used in the downstream manufacturing process. Such modifications may additionally or alternatively include any modification or series of modification that make the CAD model technically compliant with a further use of the product/part once manufactured, such modification or series of modifications being for example based on results of the simulation(s).

The CAM file may comprise a manufacturing set up model obtained from the CAD model. The manufacturing set up may comprise all data required for manufacturing the mechanical product (e.g. control instructions for controlling the manufacturing process) so that it has a geometry and/or a distribution of material that corresponds to what is captured by the CAD model, possibly up to manufacturing tolerance errors. Determining the production file may comprise applying any CAM (Computer-Aided Manufacturing) or CAD-to-CAM solution for (e.g. automatically) determining a production file from the CAD model (e.g. any automated CAD-to-CAM conversion algorithm). Such CAM or CAD-to-CAM solutions may include one or more of the following software solutions, which enable automatic generation of manufacturing instructions and tool paths for a given manufacturing process based on a CAD model of the product to manufacture:
- Fusion 360,
- FreeCAD,
- CATIA,
- SOLIDWORKS,
- The NC Shop Floor programmer of Dassault Systèmes illustrated on https://my.3dexperience.3ds.com/welcome/fr/compass-world/rootroles/nc-shop-floor-programmer,
- The NC Mill-Turn Machine Programmer of Dassault Systèmes illustrated on https://my.3dexperience.3ds.com/welcome/fr/compass-world/rootroles/nc-mill-turn-machine-programmer, and/or
- The Powder Bed Machine Programmer of Dassault Systèmes illustrated on https://my.3dexperience.3ds.com/welcome/fr/compass-world/rootroles/powder-bed-machine-programmer.

The product/part may be an additive manufacturable part, *i.e.* a part to be manufactured by additive manufacturing *(i.e.* 3D printing). In this case, the production process does not comprise the step of determining the CAM file and directly proceeds to the producing/manufacturing step, by directly (e.g. and automatically) feeding a 3D printer with the CAD model. 3D printers are configured for, upon being fed with a CAD model representing a mechanical product (e.g. and upon launching, by a 3D printer operator, the 3D printing), directly and automatically 3D print the mechanical product in accordance with the CAD model. In other words, the 3D printer receive the CAD model, which is *(e.g.* automatically) fed to it, reads *(e.g.* automatically) the CAD model, and prints *(e.g.* automatically) the part by adding together material, *e.g.* layer by layer, to reproduce the geometry and/or distribution of material captured by the CAD model. The 3D printer adds the material to thereby reproduce exactly in reality the geometry and/or distribution of material captured by the CAD model, up to the resolution of the 3D printer, and optionally with or without tolerance errors and/or manufacturing corrections. The manufacturing may comprise, *e.g.* by a user *(e.g.* an operator of the 3D printer) or automatically (by the 3D printer or a computer system controlling it), determining such manufacturing corrections and/or tolerance errors, for example by modifying the CAD file to match specifications of the 3D printer. The production process may additionally or alternatively comprise determining (e.g. automatically by the 3D printer or a computer system controlling it) from the CAD model, a printing direction, for example to minimize overhang volume (as described in European patent No. 3327593, which is incorporated herein by reference), a layer-slicing (i.e., determining thickness of each layer, and layer-wise paths/trajectories and other characteristics for the 3D printer head (e.g., for a laser beam, for example the path, speed, intensity/temperature, and other parameters).

The product/part may alternatively be a machined part *(i.e.* a part manufactured by machining), such as a milled part *(i.e.* a part manufactured by milling). In such a case, the production process may comprise a step of determining the CAM file. This step may be carried out automatically, by any suitable CAM solution to automatically obtain a CAM file from a CAD model of a machined part. The determination of the CAM file may comprise (e.g. automatically) checking if the CAD model has any geometric particularity (e.g. error or artefact) that may affect the production process and *(e.g.* automatically) correcting such particularities. For example, machining or milling based on the CAD model may not be carried out if the CAD model still comprises sharp edges (because the machining or milling tool cannot create sharp edges), and in such a case the determination of the CAM file may comprise *(e.g.* automatically) rounding or filleting such sharp edges *(e.g.* with a round or fillet radius that corresponds, *e.g.* substantially equals up to a tolerance error, the radius of the cutting head of the machining tool), so that machining or milling based on the CAD model can be done. More generally, the determination of the CAM file may automatically comprise rounding or filleting geometries within the CAD model that are incompatible with the radius of the machining or milling tool, to enable machining/milling. This check and possible corrections *(e.g.* rounding or filleting of geometries) may be carried out automatically as previously discussed, but also, by a user *(e.g.* a machining engineer), which performs the correction by hand on a CAD and/or CAM solution, *e.g.* the solution constraining the user to perform corrections that make the CAD model compliant with specifications of the tool used in the machining process.

Further to the check, the determination of the CAM file may comprise *(e.g.* automatically) determining the machining or milling path, *i.e.* the path to be taken by the machining tool to machine the product. The path may comprise a set of coordinates and/or a parameterized trajectory to be followed by the machining tool for machining, and determining the path may comprise *(e.g.* automatically) computing these coordinates and/or trajectory based on the CAD model. This computation may be based on the computation of a boundary of a Minkowski subtraction of the CAD model by a CAD model representation of the machining tool, as for example discussed in European Patent Application EP21306754.9 filed on 13 December 2021 by Dassault Systèmes, and which is incorporated herein by reference. It is to be understood that the path may be a single path, *e.g.* that the tool continuously follows without breaking contact with the material to be cut. Alternatively, the path may be a concatenation of a sequence sub-paths to be followed in a certain order by the tool, *e.g.* each being continuously followed by the tool without breaking contact with the material to be cut. Optionally, the determination of the CAM file may then comprise *(e.g.* automatically) setting machine parameters, including cutting speed, cut/pierce height, and/or mold opening stroke, for example based on the determined path and on the specification of the machine. Optionally, the determination of the CAM file may then comprise *(e.g.* automatically) configuring nesting where the CAM solution decides the best orientation for a part to maximize machining efficiency.

In this case of a machining or milling part, the determining of the CAM file thus results in, and outputs, the CAM file comprising a machining path, and optionally the set machine parameters and/or specifications of the configured nesting. This outputted CAM file may be then *(e.g.* directly and automatically) fed to the machining tool and/or the machining tool may then *(e.g.* directly and automatically) be programmed by reading the file, upon which the production process comprises the producing/manufacturing step where the machine performs the machining of the product according to the production file, *e.g.* by directly and automatically executing the production file. The machining process comprises the machining tool cutting a real-world block of material to reproduce the geometry and/or distribution of material captured by the CAD model, *e.g.* up to a tolerance error *(e.g.* tens of microns for milling).

The product/part may alternatively be a molded part, *i.e.* a part manufactured by molding *(e.g.* injection-molding). In such a case, the production process may comprise the step of determining the CAM file. This step may be carried out automatically, by any suitable CAM solution to automatically obtain a CAM file from a CAD model of a molded part. The determining of the CAM file may comprise *(e.g.* automatically) performing a sequence of molding checks based on the CAD model to check that the geometry and/or distribution of material captured by the CAD model is adapted for molding, and *(e.g.* automatically) performing the appropriate corrections if the CAD model is not adapted for molding. Performing the checks and the appropriate corrections (if any) may be carried out automatically, or, alternatively, by a user *(e.g.* a molding engineer), for example using a CAD and/or CAM solution that allows a user to perform the appropriate corrections on the CAD model but constraints him/her corrections that make the CAD model compliant with specifications of the molding tool(s). The checks may include: verifying that the virtual product as represented by the CAD model is consistent with the dimensions of the mold and/or verifying that the CAD model comprises all the draft angles required for demolding the product, as known *per se* from molding. The determining of the CAM file may then further comprise determining, based on the CAD model, a quantity of liquid material to be used for molding, and/or a time to let the liquid material harden/set inside the mold, and outputting a CAM file comprising these parameters. The production process then comprises (e.g. automatically) performing the molding based on the outputted file, where the mold shapes, for the determined hardening time, a liquid material into a shape that corresponds to the geometry and/or distribution of material captured by the CAD model, *e.g.* up to a tolerance error *(e.g.* up to the incorporation of draft angles or to the modification of draft angles, for demolding).

The product/part may alternatively be a stamped part, also possibly referred to as "stamping part", *i.e.* a part to be manufactured in a stamping process. The production process may in this case comprise (e.g. automatically) determining a CAM file based on the CAD model. The CAD model represents the stamping part, e.g. possible with one or more flanges if the part is to comprise some, and possibly in this latter case with extra material to be removed so as to form an unfolded state of one or more flanges of the part, as known *per se* from stamping. The CAD model thus comprises a portion that represents the part without the flanges (which is the whole part in some cases) and possibly an outer extra patch portion that represents the flanges (if any), with possibly the extra material (if any). This extra patch portion may present a g2-continuity over a certain length and then a g1-continuity over a certain length.

The determination of the CAM file may in this stamping case comprise (e.g. automatically) determining parameters of the stamping machine, for example a size of a stamping die or punch and/or a stamping force, based on the geometry and/or distribution of material of the virtual product as captured by the CAD model. If the CAD model also comprises the representation of the extra material to be removed so as to form an unfolded state of one or more flanges of the part, the extra material to be removed may for example be cut by machining, and determining the CAM file may also comprise determining a corresponding machining CAM file, e.g. as discussed previously. If there are one or more flanges, determining the CAM file may comprise determining geometrical specifications of the g2-continuity and g1-continuity portions that allow, after the stamping itself and the removal of the extra material, to fold in a folding process the flanges towards an inner surface of the stamped part and along the g2-continuity length. The CAM file thereby determined may thus comprise: parameters of the stamping tool, optionally said specifications for folding the flanges (if any), and optionally a machining production file for removing the extra material (if any).

The stamping production process may then output, e.g. directly and automatically, the CAM file, and perform the stamping process (e.g. automatically) based on the file. The stamping process may comprise stamping *(e.g.* punching) a portion of material to form the product as represented by the CAD file, that is possibly with the unfolded flanges and the extra material (if any). Where appropriate, the stamping process may then comprise cutting the extra material based on the machining production file and folding the flanges based on said specifications for folding the flanges, thereby folding the flanges on their g2-continuity length and giving a smooth aspect to the outer boundary of the part. In this latter case, the shape of the part once manufactured differ from its virtual counterpart as represented by the CAD model in that the extra material is removed and the flanges are folded, whereas the CAD model represents the part with the extra material and the flanges in an unfolded state.

The method is computer-implemented. This means that steps (or substantially all the steps) of the method are executed by at least one computer, or any system alike. Thus, steps of the method are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database).

FIG. 57 shows an example of the system, wherein the system is a client computer system, e.g. a workstation of a user.

The client computer of the example comprises a central processing unit (CPU) 5701 connected to an internal communication BUS 5700, a random access memory (RAM) 5707 also connected to the BUS. The client computer is further provided with a graphical processing unit (GPU) 5711 which is associated with a video random access memory 5710 connected to the BUS. Video RAM 5710 is also known in the art as frame buffer. A mass storage device controller 5702 manages accesses to a mass memory device, such as hard drive 5703. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 5705 manages accesses to a network 5706. The client computer may also include a haptic device 5709 such as cursor control device, a keyboard or the like. A cursor control device is used in the client computer to permit the user to selectively position a cursor at any desired location on display 5708. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

## Claims

1. **A computer-implemented** method for forming a gap on a surface, the surface representing a surface portion of a product to be manufactured, the method comprising:
- providing specifications of the gap, the specifications comprising:
∘ a radius of a connection between the surface and flanges of the gap;
∘ a profile of the gap; and
∘ a shape defining the gap on the surface;
- sweeping the profile along the shape; and
- connecting the result of the sweep to the surface by applying a fillet operation having as radius the provided radius.

2. The method of claim 1, wherein the shape defining the gap comprises one or more curves, the curves lying on the surface.

3. The method of claim 2, wherein:
- the shape comprises the projection to the surface of one or more curves, and the projection is with respect to sight direction during drawing, normal direction to the surface, or a user-defined direction; and/or
- the shape comprises the intersection of the surface with one or more other surfaces.

4. The method of any one of claims 2 to 3, wherein the method further comprises determining, for each given curve included in the shape, two additional curves that are both parallel to the given curve, and applying the fillet operation comprises trimming a portion of the surface in between the two additional parallel curves.

5. The method of any one of claims 2 to 4, wherein the method further comprises, for each curve included in the shape which has at least an extremal point lying in the interior of the surface, extending said curve to either a closed curve, or a curve having extremal points lying in the boundary of the surface.

6. The method of any one of claims 1 to 5, wherein the method further comprises separating the result of the fillet operation into surfaces each comprising a respective flange of the gap, the separation consisting in removing a bottom portion of the gap.

7. The method of any one of claims 1 to 6, wherein the profile of the gap is a curve with two extremal points, the curve being without auto-intersections and lying in a plane, the extremal points being at the same height in the plane.

8. The method of any one of claims 1 to 7, wherein the profile is defined by a thickness of the gap and a depth of the gap.

9. The method of claim 8, wherein the specifications of the gap include the thickness of the gap and the depth of the gap, and the method comprises automatically computing the profile based on the thickness of the gap and the depth of the gap.

10. The method of any one of claims 1 to 9, wherein the shape of the gap, the profile of the gap and the radius of the connection respect manufacturing and/or use constraints.

11. The method of claim 10, wherein the shape of the gap, the profile of the gap and the radius of the connection stem from a simulation of a performance of the product with respect to the manufacturing and/or use constraints.

12. A computer-implemented data structure comprising specifications of a gap, the specifications forming semantic data associated to data defining a surface representation of a surface portion of a product to be manufactured, the specifications comprising:
- a radius of a connection between the surface and flanges of the gap;
- a profile of the gap; and
- a shape defining the gap on the surface.

13. A computer program comprising instructions which, when executed by a computer system, cause the computer system to perform the method according to any one of claims 1 to 11.

14. A computer-readable data storage medium having recorded thereon the computer program of claim 13 and/or the data structure of claim 12.

15. A computer system comprising a processor coupled to a memory, the memory having recorded thereon the computer program of claim 13 and/or the data structure of claim 12.
